# EUROPEAN PATENT SPECIFICATION

(11) **EP 4 001 989 B1**
(45) Date of publication and mention of the grant of the patent: **09.07.2025**
(21) Application number: 20207116.3
(22) Date of filing: 12.11.2020
(51) Int. Cl.: G02B 19/00

(54) **ELECTRONIC DEVICE AND METHOD FOR AN ELECTRONIC DEVICE**
ELEKTRONISCHE VORRICHTUNG UND VERFAHREN FÜR EINE ELEKTRONISCHE VORRICHTUNG
DISPOSITIF ÉLECTRONIQUE ET PROCÉDÉ POUR DISPOSITIF ÉLECTRONIQUE

(43) Date of publication of application: 25.05.2022
(73) Proprietor: Infineon Technologies AG, 85579 Neubiberg (DE)
(72) Inventor: PLANK, Hannes, 8010 Graz (AT); DIELACHER, Markus, 8046 Graz (AT); FLATSCHER, Martin, 8020 Graz (AT); HEISS, Heinrich Guenther, 81373 München (DE); LOBNIK, Robert, 9135 Bad Eisenkappel (AT); SCHOENLIEB, Armin, 8054 Seiersberg-Pirka (AT)
(74) Representative: 2SPL Patentanwälte PartG mbB

(56) References cited:
- CN-A- 109 141 485
- CN-B- 107 767 835
- JP-A- 2008 304 523
- US-A1- 2015 201 130

## Description

### Field

The present disclosure relates to an electronic device and a method for an electronic device.

### Background

Sensors for face recognition, autofocus or depth sensing use an active infrared illumination unit. Displays of devices like smartphones tend to occupy the complete front side of the device such that the camera is located under the display. An exemplary liquid crystal display with a microlens array for condensing light is proposed in document JP 2008 304523 A. As the average transparency of displays is limited, the illumination units become inefficient when the light needs to pass through the display. Sensors in mobile devices like smartphones run on a limited power budget due to the limited battery capacity of the mobile device. Current display devices are only transparent to a certain degree, leading to a higher power consumption of the illumination unit compared to devices in which the illumination unit is not mounted under the display.

The absorbed light causes punctual heating at the display which may cause an aging effect on the display pixels. Furthermore, the heat causes punctual expansion of the display, which contributes to glass fracture. The light reflected by the display may further impair cameras located under the display. Another point is the additionally generated dark current/leakage current caused by the additional backlight illumination of the light source below the display.

Document CN 109 141 485 A relates to an electronic device consisting of a proximity sensor component and display screen component. The proximity sensor component is utilized for electronic devices with OLED screens where there are gaps between pixels of the OLED screen and the pixel driving circuit. The proximity sensor component has a light emitting body as well as a light guiding structure that creates a path of light to bypass the transmission gap. This ensures that there is no negative impact on the OLED pixel organic light-emitting material or driving circuit, without sacrificing extra display space on the OLED screen while meeting the requirement for full-screen development.

Document CN 107 767 835 B relates to a display component and an electronic device. The display component includes a display screen and a sensor component located on one side of the screen. The light signals emitted from the display screen contain a target color signal with a wavelength within the target range. The sensor component consists of an ambient light sensor, which is connected to a light filter component between the ambient light sensor and the display screen. The light filter component filters the external ambient light signal passing through the display screen and transmits the filtered ambient light signal to the ambient light sensor. The color of the filtered ambient light signal is the target color, and the wavelength is outside the target wavelength range. This solution reduces the brightness of the display screen's impact on the ambient light sensor's light detection, enabling the ambient light sensor to accurately sense the external ambient light signals and improve the accuracy of electronic devices controlling the display screen's brightness.

There may be a demand for improved light guidance for under-display illumination structures.

### Summary

The invention is defined by the subject matter of the appended claims. The electronic device comprises a display device comprising a plurality of light-emitting elements for displaying an optical image on a front side of the display device. Further, the electronic device comprises a plurality of illumination elements configured to emit light for illuminating a scene in front of the front side of the display device. The display device is arranged between the plurality of illumination elements and the scene. The display device comprises a first display region exhibiting a first transmissivity for the light emitted by the plurality of illumination elements and a second display region exhibiting a second transmissivity for the light emitted by the plurality of illumination elements. The first transmissivity is higher than the second transmissivity. The electronic device additionally comprises at least one optical element arranged between the plurality of illumination elements and the display device. The at least one optical element is configured to focus the light emitted by the plurality of illumination elements through the first display region. Further, the electronic device comprises an optical sensor configured to measure a fraction of the light emitted by the plurality of illumination elements that is reflected back from the scene. The display device is arranged between the optical sensor and the scene. The electronic device additionally comprises control circuitry configured to receive object information indicating a position or a movement of an object in the scene. The control circuitry is configured to determine a part of the scene that likely contains the object based on the object information. In addition, the control circuitry is configured to selectively control light emission by individual illumination elements of the plurality of illumination elements in order to selectively illuminate the part of the scene that likely contains the object.

Another example relates to a method for an electronic device comprising a display device, a plurality of illumination elements, at least one optical element, an optical sensor and control circuitry. The display device comprises a plurality of light-emitting elements for displaying an optical image on a front side of the display device. The at least one optical element is arranged between the plurality of illumination elements and the display device. The display device is arranged between the optical sensor and the scene. The method comprises emitting light for illuminating a scene in front of the front side of the display device by the plurality of illumination elements. The display device is arranged between the plurality of illumination elements and the scene. The display device comprises a first display region exhibiting a first transmissivity for the light emitted by the plurality of illumination elements and a second display region exhibiting a second transmissivity for the light emitted by the plurality of illumination elements. The first transmissivity is higher than the second transmissivity. The method further comprises focusing the light emitted by the plurality of illumination elements through the first display region using the at least one optical element. In addition, the method comprises measuring, by the optical sensor, a fraction of the light emitted by the plurality of illumination elements that is reflected back from the scene. The method comprises receiving, by the control circuitry, object information indicating a position or a movement of an object in the scene. In addition, the method comprises determining, by the control circuitry, a part of the scene that likely contains the object based on the object information. Further, the method comprises selectively controlling, by the control circuitry, light emission by individual illumination elements of the plurality of illumination elements in order to selectively illuminate the part of the scene that likely contains the object

### Brief description of the Figures

Some examples of apparatuses and/or methods will be described in the following by way of example only, and with reference to the accompanying figures, in which
Fig. 1 illustrates a first example of an electronic device;
Fig. 2 illustrates a second example of an electronic device;
Fig. 3 illustrates a third example of an electronic device; and
Fig. 4 illustrates a flowchart of an example of a method for an electronic device.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

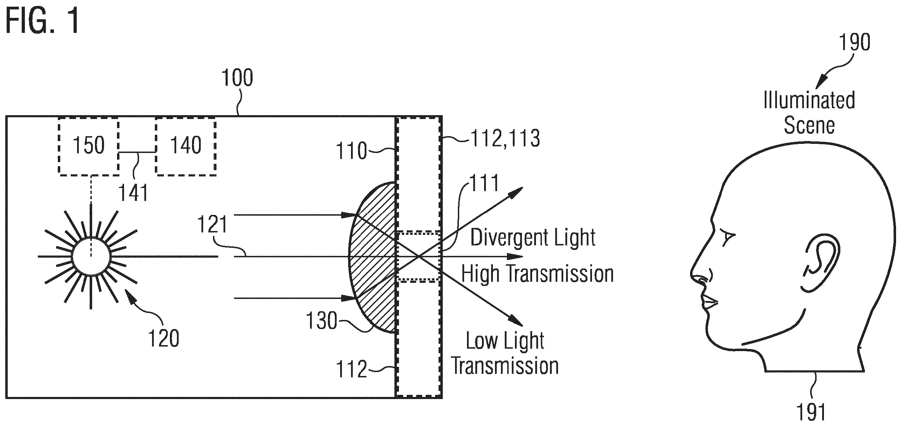

Fig. 1 illustrates an electronic device 100 such as, e.g., a smartphone, a tablet-computer or a laptop-computer. However, it is to be noted that the electronic device 100 may be any other electronic device as well.

The electronic device 100 comprises a display device 110. The display device 110 comprises a plurality of light-emitting elements (circuitries, devices) for displaying an optical image on a front side 113 of the display device 110. The front side 113 of the display device 110 is the side of the display device 110 that can be seen by a user of the electronic device 100. For example, the plurality of light-emitting elements may be arranged in an array as pixels for displaying the optical image. The display device 110 may be formed according to a display technology. For example, the display device 110 may be a Light Emitting Diode (LED) display, an Organic LED (OLED) display, a Liquid Crystal Display (LCD) or a micro LED display. However, it is to be noted that any other display technology may be used as well for the display device 110.

The display device 110 may cover (substantially) the entire front surface of the electronic device 100 as illustrated in Fig. 1. In other examples, the display device 110 may cover only a fraction of the electronic device 100's front surface.

The electronic device 100 further comprises at least one illumination element (circuit, device). In the example of Fig. 1, one illumination element 120 is illustrated. However, the electronic device 100 may optionally comprise plural illumination elements. The at least one illumination element 120 is configured to emit light 121 for illuminating a scene 190 in front of the front side 113 of the display device 110. The at least one illumination element 120 is arranged within the electronic device 100 at a back side of the display device 110. In other words, the display device 110 is arranged between the at least one illumination element 120 and the scene 190. As a consequence, the light 121 needs to transmit through the display device 110 in order to reach the scene 190. In general, the light 121 emitted by the illumination element 120 may be of any desired (target) wavelength (wavelength range). For example, the at least one illumination element 120 may be configured to emit infrared light as the light 121 (i.e. the wavelength of the light 121 is between approx. 700 nm and approx. 1 mm). The at least one illumination element 120 may, e.g., comprise/be one or more LEDs and/or one or more laser diodes (e.g. one or more Vertical-Cavity Surface-Emitting Lasers, VCSELs).

The display device 110 exhibits a non-uniform transmissivity for the light 121 emitted by the at least one illumination element 120. As indicated in Fig. 1, the display device 110 comprises a first display region 111 exhibiting a first transmissivity for the light 121 emitted by the at least one illumination element. Further, the display device 110 comprises a second display region 112 exhibiting a second transmissivity for the light 121 emitted by the at least one illumination element 120. The first transmissivity is higher than the second transmissivity. That is, the fraction of the light 121 that is transmitted through the display device 110 per illuminated unit area of the display device 110 is higher in the first display region 111 than in the second display region 112. In other words, the light 121 can more easily transmit through first display region 111 than through the second display region 112. The first display region 111 and the second display region 112 are different integral parts of the display device 110. The first display region may be a coherent (connected) region of the display device 110 or comprise a plurality of non-coherent (discontinuous) sub-regions.

In order to achieve the increased transparency for the light 121 in the first display region 111, a substrate (not illustrated) of the display device 110 may, e.g., be covered in the first display region 111 per unit area to a lesser extent with electronic circuitry of the display device 110 than in the second display region 112. For example, less electronic circuitry of the display device may be arranged in the first display region 111 compared to the second display region 112. Alternatively or additionally, electronic circuitry of a smaller form factor may be arranged in the first display region 111 compared to the second display region 112. For example, micro LEDs may be used in the first display region while OLEDs may be used in the second region. As micro LEDs are smaller in size than OLEDs, the substrate of the display device 110 is covered in the first display region 111 per unit area to a lesser extent with LEDs than in the second display region 112. In other examples, a resolution of the display may be reduced in the first display region 111 compared to the second display region 112 such that less electronic circuitry (e.g. less LEDs) is provided per unit area on the substrate for the first display region 111 than for the second display region 112. In other words, single light emitting devices/pixels or sets of light emitting devices/pixels may be omitted in the first display region 111 compared to the second display region 112.

In other examples, the arrangement of the light emitting devices/pixels may be altered in the first display region 111 compared to the second display region 112. Additionally or alternatively, the circuit layout of the light emitting devices/pixels may be altered in the first display region 111 compared to the second display region 112.

However, it is to be noted that the above examples for increasing the transparency for the light 121 in the first display region 111 compared to the second display region 112 are not limiting the proposed architecture. Also other designs of the display device may provide increased transparency for the light 121 in the first display region 111.

In order to make use of the non-uniform transmissivity of the display device 110 for the light 121, the electronic device 100 comprises at least one optical element (device) 130 arranged between the at least one illumination element 120 and the display device 110. The at least one optical element 130 is configured to focus the light 121 emitted by the at least one illumination element 120 through the first display region 111 such that the light 121 transmits (passes) through the first display region 111 rather than through the second display region 112. In other words, at least one optical element 130 is configured to direct the light 121 emitted by the at least one illumination element 120 towards the first display region 111 such that a light density of the light 121 transmitting through the first display region 111 is higher than a light density of the light 121 transmitting through the second display region 112. In the example of Fig. 1, one optical element 130 is illustrated. However, the electronic device 100 may optionally comprise plural optical elements arranged between the at least one illumination element 120 and the display device 110 for focusing the light 121 emitted by the at least one illumination element 120 through the first display region 111.

As illustrated in Fig. 1, the at least one optical element 130 may be arranged on the back side of the display device 110 at a position of the first display region 111 (i.e. facing the first display region 111). However, the proposed architecture is not limited thereto. In alternative examples, the at least one optical element 130 may be spaced apart from the display device 110 (e.g. an air gap may be formed between the at least one optical element 130 and the display device 110). According to examples of the present disclosure, dimensions of the at least one optical element 130 may be greater than that of the first display region 111 in at least one spatial direction. In other words, the at least one optical element 130 may stretch beyond the first display region 111 in at least one spatial direction. For example, the dimensions of the at least one optical element 130 may be greater than that of the first display region 111 in two spatial directions that are perpendicular with respect to each other and with respect to the front side 113 of the display device 110. For example, the at least one optical element 130 may be a lens or a lens system (comprising a plurality of lenses).

As the light 121 is focused through a region of the display 110 with increased transparency for the light 121, a higher fraction of the light 121 can transmit through the display device 110. Accordingly, a power of the light 121 may be reduced compared to conventional under-display illumination structures. As a consequence, a power consumption of the at least one illumination element 120 may be reduced compared to conventional under-display illumination structures. Further, heating of the display 110 via the light 121 and, hence, an expansion of the display device 110 may be reduced. Therefore, the likelihood of a display damage (e.g. glass fracture) may be reduced.

Although not explicitly illustrated in Fig. 1, the electronic device 100 may optionally further comprise at least one diffusion element which is configured to diffuse the light focused through the first display region 111. For example, the diffusion element may be arranged between the at least one optical element 130 and the first display region 111, be formed in the display device 110 (e.g. within the first display region 111) or be formed on the front side 113 of the display device 110 (e.g. within the first display region 111). By diffusing the light via the at least one diffusion element, a width of the light focused through the first display region 111 may be increased such that a larger part of the scene 190 may be illuminated at once. Further, a more even light distribution may be achieved by diffusing the light.

In other words, an (e.g. infrared) illumination unit 120 is located behind a display device 110 according to the proposed technique. The (e.g. typically) narrow beam of the illumination unit 120 is directed at a focusing element 130, which is located rather close to the display device 110. As described above, display devices typically do not have a homogenous transparency. As a consequence, the focusing element 130 focuses the light beam onto an area of the display device 110 with increased transparency. As a side effect, the light gets diffused and the width of the light beam is increased for illuminating a larger part of the scene.

As indicated in Fig. 1, the electronic device 100 may optionally further comprise an optical sensor 140. The optical sensor 140 is configured to measure reflected light from the scene, i.e. the optical sensor 140 is configured to measure the fraction of the light 121 that is reflected back from the scene 190. The optical sensor may, e.g., comprise a Photonic Mixer Device, PMD, or a Charge-Coupled Device, CCD for measuring the reflected light from the scene. The optical sensor 140 is arranged within the electronic device 100 at the back side of the display device 110. In other words, the display device 110 is arranged between the optical sensor 140 and the scene 190. Accordingly, the reflected light from the scene transmits through the display device 110 before it reaches the optical sensor 140.

For example, the optical sensor 140 may be a Time-of-Flight (ToF) sensor. The optical sensor 140 may alternatively be part of a camera such as, e.g., a ToF camera, an active stereo camera or any other infrared camera. In other examples, the optical sensor 140 may be part of distance measuring device (e.g. a single pixel ToF camera for auto focus adjustment). Accordingly, the optical sensor 140 may comprise processing circuitry configured to determine, based on the measured reflected light from the scene, 190 at least one of an image of at least part of the scene 190 or a distance of the electronic device 110 to at least one object (such as the head 191) in the scene 190.

The measurements of the optical sensor 140 may further be used for controlling the operation of the at least one illumination element 120. For example, the electronic device may further comprise control circuitry 150 configured to receive an output signal 141 of the optical sensor 140. The output signal 141 indicates an intensity of the reflected light measured by the optical sensor 140. Accordingly, the control circuitry 150 may be further configured to control a light emission intensity of the at least one illumination element 120 based on the output signal 141. In other words, the at least one illumination element 120 may be controlled based on the received signal strength of the optical sensor 140 (which may, e.g., be part of a camera). For example, the above control technique may allow to give dark objects in the scene 190 more light.

Although not illustrated in Fig. 1, the electronic device 100 may optionally comprise further circuitry/elements such as, e.g., one or more microphones, one or more loudspeakers, one or more antennas, one or more application processors, one or more radio frequency transmitters and/or receivers for mobile communication, one or more data storages, one or more batteries, etc.

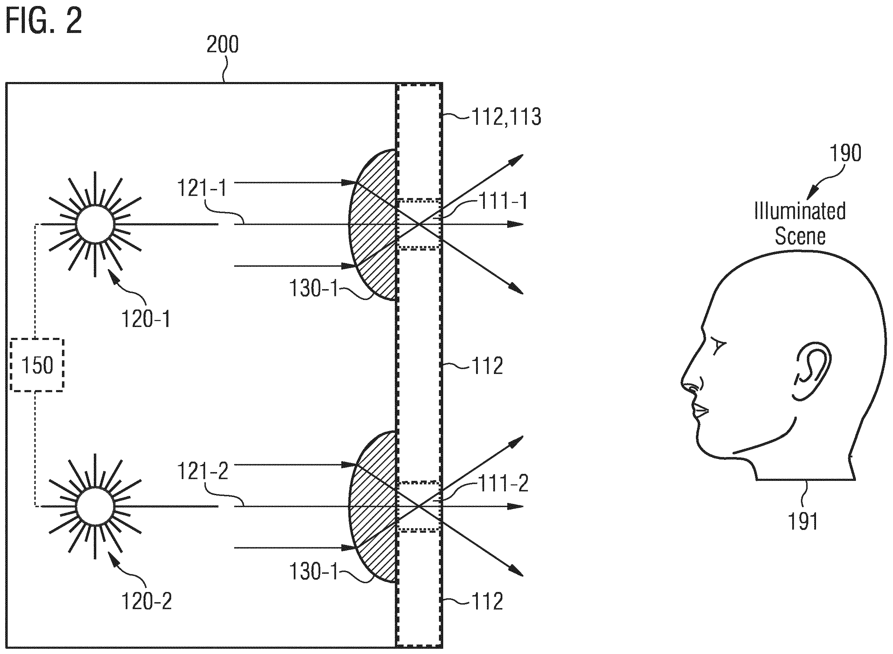

In the example of Fig. 1, the electronic device 100 comprises a single illumination element 120. As described above, the electronic device 100 may optionally comprise further illumination elements. An exemplary electronic device 200 comprising two illumination elements 120-1 and 120-2 is illustrated in Fig. 2. In the following, mostly the differences between the electronic device 100 and the electronic device 200 will be highlighted. Unless explicitly excluded, the electronic device 200 may exhibit each feature / comprise each element described above with respect to Fig. 1. The electronic device 200 is an example of an electronic device according to the proposed technique that comprises a plurality of illumination elements. Although the electronic device 200 comprises exactly two illumination elements 120-1 and 120-2, it is to be noted that electronic devices according to the proposed technique may comprise more than two illumination elements for illuminating the scene 190.

In the example of Fig. 2, the first display region comprises two sub-regions 111-1 and 111-2. However, the proposed technique is not limited thereto. The first display region may comprise any number of sub-regions. Each of the sub-regions 111-1 and 111-2 exhibits the same characteristics as the first display region 111 described above with reference to Fig. 1.

A respective optical element 130-1, 130-2 is arranged between each of the two illumination elements 120-1, 120-2 and the display device 110 for focusing the light 121-1, 121-2 emitted by the respective illumination element 120-1, 120-2 through the first display region. In particular, the optical elements 130-1, 130-2 focus the light 121-1, 121-2 emitted by the respective illumination element 120-1, 120-2 through the two sub-regions 111-1 and 111-2 of the first display region. However, it is to be noted that optionally two or more optical elements may be respectively arranged between at least one of the two illumination elements 120-1, 120-2 and the display device 110 for focusing the light 121-1, 121-2 emitted by the respective illumination element 120-1, 120-2 through the first display region. For example, two optical elements may be arranged between the illumination element 120-1 and the display device 110 for focusing the light 121-1 emitted by the illumination element 120-1 through the sub-region 111-1 of the first display region.

In more general terms, an electronic device according to the proposed technique may comprise a plurality of illumination elements and a plurality of optical elements. At least one of the plurality of optical elements may be arranged between each of the plurality of illumination elements and the display device for focusing the light emitted by the respective illumination element through the first display region. Optionally, at least two of the plurality of optical elements may respectively be arranged between at least part of the plurality of illumination elements and the display device for focusing the light emitted by the respective illumination element through the first display region. As indicated in Fig. 2, the first display region may comprise a plurality of sub-regions such that the plurality of optical elements are configured to focus the light emitted by the individual illumination elements of the plurality of illumination elements through different ones of the plurality of sub-regions.

In other words, there may be multiple light sources and multiple focusing elements. Further, each of these light sources may have multiple focusing elements.

The illumination elements 120-1 and 120-2 may be controlled commonly or individually by the control circuitry 150. For example, the control circuitry 150 may be configured to selectively control light emission by individual ones of the illumination elements 120-1 and 120-2 in order to adjust a target illumination characteristic. As described above, an electronic device according to the proposed technique may comprise more than two illumination units. Accordingly, in more general terms, the control circuitry 150 may be configured to selectively control light emission by individual illumination elements of a plurality of illumination elements of the electronic device in order to adjust the target illumination characteristic. The target illumination characteristic denotes a desired illumination of the scene 190 or at least part thereof. For example, the target illumination characteristic may define one or more parts of the scene 190 that are to be illuminated. Further, the target illumination characteristic may define a common or individual light intensity for the illumination of the one or more parts of the scene 190.

For example, the control circuitry 150 may be configured to receive object information indicating a position or a movement of an object such as the head 191 in the scene 190. Further, the control circuitry 150 may be configured to determine a part of the scene 190 that likely contains the object based on the object information and selectively control light emission by individual illumination elements of the plurality of illumination elements in order to selectively illuminate the part of the scene that likely contains the object. For example, if the object information indicates that the head 191 is in the upper part of the scene 190, the control circuitry 150 may determine that the upper part of the scene 190 likely contains the head. Accordingly, the control circuitry 150 may, e.g., only activate the illumination element 121-1 in order to illuminate the upper part of the scene 190 that likely contains the head 191. The object information may, e.g., be provided by a tracking application executed on the electronic device 200 or a sensor of the electronic device 200.

In more general terms, when multiple light sources and focusing elements are used, the directions of the light sources may be adjusted individually in order to achieve a target illumination characteristic (e.g. for focusing the light on the expected object location or for getting an even light distribution). The illumination unit and/or the focusing element may be arranged so that the center of the exiting light beam is not perpendicular to the display device (e.g. a direct light beam to the expected object direction may be sent out).

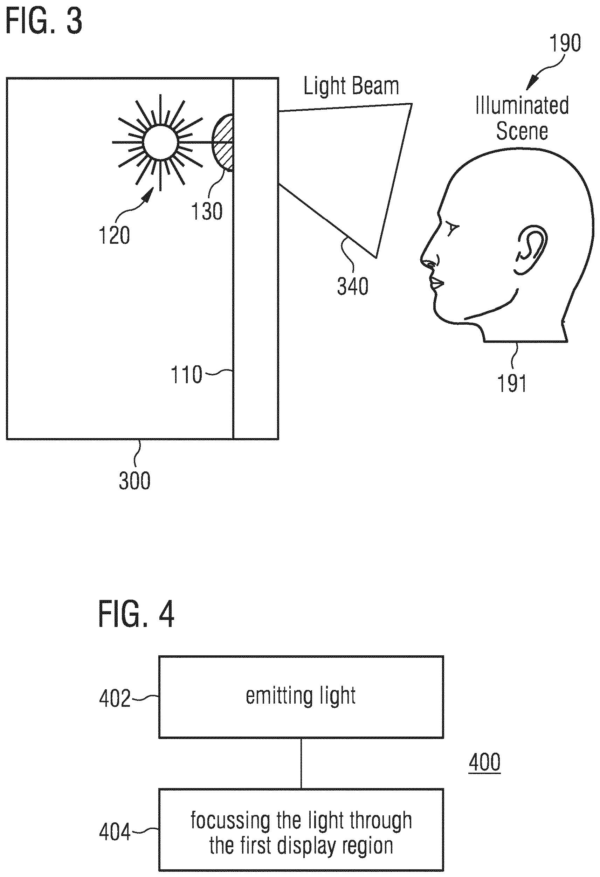

For example, the individual control of the light sources (which exhibit different directional characteristics) may enable to track an object with the combined light beam. Accordingly, less light may be wasted for tracking the object. This is illustrated in Fig. 3.

Fig. 3 illustrates an electronic device 300. The electronic device 300 comprises a plurality of illumination elements. For reasons of simplicity, the plurality of illumination elements are represented by the single illumination element 120 in Fig. 3. Similar to what is described above, the plurality of illumination elements are arranged at the back side of a display 110.

Further, the electronic device 300 comprises a plurality of optical elements arranged between each of the plurality of illumination elements and the display device 110 for focusing the light emitted by the respective illumination element through the first display region of the display device 110. As described above, the first display region exhibits a higher transmissivity for the light emitted by the plurality of illumination elements compared to the remaining display region. For reasons of simplicity, the plurality of optical elements are represented by the single optical element 130 in Fig. 3.

By selectively activating individual illumination elements of the plurality of illumination elements, a target illumination characteristic can be adjusted. In particular, a shape of the light beam 340 caused by the overlapping light emissions of selectively activated illumination elements can be adjusted in order to selectively illuminate a target (desired) part of the scene 190.

For example, if the control circuitry 150 that controls the plurality of illumination elements receives object information indicating a position or a movement of the head 191 in the scene 190. The control circuitry 150 determines a part of the scene 191 that likely contains the head 191 based on the object information. Accordingly, the control circuitry selectively activates individual illumination elements of the plurality of illumination elements in order to selectively illuminate the part of the scene 190 that likely contains the head. Based on updated object information, the shape of the light beam 340 may be continuously changed (adjusted) such that the light beam 340 follows the movement of the head 191. Accordingly, an efficient tracking of the head is enabled. For example, the above approach may be used for face recognition applications.

In order to summarize the processing in the above examples, Fig. 4 illustrates a flowchart of an exemplary method 400 for an electronic device. As described above, the electronic device comprises a display device, at least one illumination element and at least one optical element. The display device comprises a plurality of light-emitting elements for displaying an optical image on a front side of the display device. The at least one optical element is arranged between the at least one illumination element and the display device.

The method 400 comprises emitting 402 light for illuminating a scene in front of the front side of the display device by the at least one illumination element. The display device is arranged between the at least one illumination element and the scene. The display device comprises a first display region exhibiting a first transmissivity for the light emitted by the at least one illumination element and a second display region exhibiting a second transmissivity for the light emitted by the at least one illumination element. The first transmissivity is higher than the second transmissivity. The method 400 further comprises focusing 404 the light emitted by the at least one illumination element through the first display region using the at least one optical element.

As the light is directed towards a region of the display device with increased transparency according to the method 400, a higher fraction of the light can transmit through the display device compared to conventional approaches.

More details and aspects of the method 400 are explained in connection with the proposed technique or one or more examples described above (e.g. Figs. 1 to 3). The method 400 may comprise one or more additional optional features corresponding to one or more aspects of the proposed technique or one or more examples described above.

The examples as described herein may be summarized as follows:
Some examples relate to an electronic device. The electronic device comprises a display device comprising a plurality of light-emitting elements for displaying an optical image on a front side of the display device. Further, the electronic device comprises at least one illumination element configured to emit light for illuminating a scene in front of the front side of the display device. The display device is arranged between the at least one illumination element and the scene. The display device comprises a first display region exhibiting a first transmissivity for the light emitted by the at least one illumination element and a second display region exhibiting a second transmissivity for the light emitted by the at least one illumination element. The first transmissivity is higher than the second transmissivity. The electronic device additionally comprises at least one optical element arranged between the at least one illumination element and the display device. The at least one optical element is configured to focus the light emitted by the at least one illumination element through the first display region.

In some examples, the electronic device comprises a plurality of optical elements arranged between the at least one illumination element and the display device for focusing the light emitted by the at least one illumination element through the first display region.

In some examples, at least one of the plurality of optical elements is arranged between each of the plurality of illumination elements and the display device for focusing the light emitted by the respective illumination element through the first display region.

In alternative examples, at least two of the plurality of optical elements are respectively arranged between at least part of the plurality of illumination elements and the display device for focusing the light emitted by the respective illumination element through the first display region.

According to some examples, the first display region comprises a plurality of sub-regions, wherein the plurality of optical elements are configured to focus the light emitted by the individual illumination elements of the plurality of illumination elements through different ones of the plurality of sub-regions.

In some examples, the electronic device further comprises control circuitry configured to selectively control light emission by individual illumination elements of the plurality of illumination elements in order to adjust a target illumination characteristic.

According to some examples, the control circuitry is configured to: receive object information indicating a position or a movement of an object in the scene; determine a part of the scene that likely contains the object based on the object information; and selectively control light emission by individual illumination elements of the plurality of illumination elements in order to selectively illuminate the part of the scene that likely contains the object.

In some examples, a substrate of the display device is in the first display region per unit area to a lesser extent covered with electronic circuitry of the display device than in the second display region.

According to some examples, the at least one optical element is further configured to diverge the light emitted by the at least one illumination element.

In some examples, the electronic device further comprises an optical sensor configured to measure reflected light from the scene.

According to some examples, the electronic device further comprises control circuitry configured to: receive an output signal of the optical sensor indicating an intensity of the reflected light measured by the optical sensor; and control a light emission intensity of the at least one illumination element based on the output signal.

In some examples, the optical sensor comprises processing circuitry configured to determine, based on the measured reflected light from the scene, at least one of an image of at least part of the scene or a distance of the electronic device to at least one object in the scene.

According to some examples, the at least one illumination element is configured to emit infrared light.

In some examples, the electronic device is one of a smartphone, a tablet-computer and a laptop-computer.

Other examples relate to a method for an electronic device comprising a display device, at least one illumination element and at least one optical element. The display device comprises a plurality of light-emitting elements for displaying an optical image on a front side of the display device. The at least one optical element is arranged between the at least one illumination element and the display device. The method comprises emitting light for illuminating a scene in front of the front side of the display device by the at least one illumination element. The display device is arranged between the at least one illumination element and the scene. The display device comprises a first display region exhibiting a first transmissivity for the light emitted by the at least one illumination element and a second display region exhibiting a second transmissivity for the light emitted by the at least one illumination element. The first transmissivity is higher than the second transmissivity. The method further comprises focusing the light emitted by the at least one illumination element through the first display region using the at least one optical element.

Examples of the present disclosure may provide a light focusing element for under-display illumination units. When using a light source behind a display device, the focusing element may allow to let light pass through (more) transparent areas of the display and to simultaneously diverge the light to illuminate the scene in front of the display.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An electronic device (100, 200, 300), comprising:
a display device (110) comprising a plurality of light-emitting elements for displaying an optical image on a front side of the display device (110);
a plurality of illumination elements (120-1, 120-2) configured to emit light (121) for illuminating a scene (190) in front of the front side of the display device (110), wherein the display device (110) is arranged between the plurality of illumination elements (120-1, 120-2) and the scene (190), wherein the display device (110) comprises a first display region (111) exhibiting a first transmissivity for the light (121) emitted by the plurality of illumination elements (120-1, 120-2) and a second display region (112) exhibiting a second transmissivity for the light (121) emitted by the plurality of illumination elements (120-1, 120-2), the first transmissivity being higher than the second transmissivity;
at least one optical element (130) arranged between the plurality of illumination elements (120-1, 120-2) and the display device (110), wherein the at least one optical element (130) is configured to focus the light emitted by the plurality of illumination elements (120-1, 120-2) through the first display region (111);
an optical sensor (140) configured to measure a fraction of the light (121) emitted by the plurality of illumination elements (120-1, 120-2) that is reflected back from the scene (190), wherein the display device (110) is arranged between the optical sensor (140) and the scene (190); and
control circuitry (150) configured to:
receive object information indicating a position or a movement of an object in the scene (190);
determine a part of the scene (190) that likely contains the object based on the object information; and
selectively control light emission by individual illumination elements of the plurality of illumination elements (120-1, 120-2) in order to selectively illuminate the part of the scene (190) that likely contains the object.

2. The electronic device of claim 1, wherein the electronic device comprises a plurality of optical elements arranged between the plurality of illumination elements (120-1, 120-2) and the display device (110) for focusing the light emitted by the plurality of illumination elements (120-1, 120-2) through the first display region (111).

3. The electronic device of claim 2, wherein at least one of the plurality of optical elements is arranged between each of the plurality of illumination elements (120-1, 120-2) and the display device (110) for focusing the light emitted by the respective illumination element through the first display region (111).

4. The electronic device of claim 2, wherein at least two of the plurality of optical elements are respectively arranged between at least part of the plurality of illumination elements (120-1, 120-2) and the display device (110) for focusing the light emitted by the respective illumination element through the first display region (111).

5. The electronic device of claim 3 or claim 4, wherein the first display region (111) comprises a plurality of sub-regions (111-1, 111-2), and wherein the plurality of optical elements are configured to focus the light emitted by the individual illumination elements of the plurality of illumination elements (120-1, 120-2) through different ones of the plurality of sub-regions (111-1, 111-2).

6. The electronic device of any of claims 1 to 5, a substrate of the display device (110) is in the first display region (111) per unit area to a lesser extent covered with electronic circuitry of the display device (110) than in the second display region (112).

7. The electronic device of any of claims 1 to 6, further comprising at least one diffusion element configured to diffuse the light focused through the first display region (111).

8. The electronic device of any one of claims 1 to 7, wherein the control circuitry (150) is further configured to:
receive an output signal (141) of the optical sensor (140) indicating an intensity of the reflected light measured by the optical sensor (140); and
control a light emission intensity of the plurality of illumination elements (120-1, 120-2) based on the output signal (141).

9. The electronic device of any one of claims 1 to 8, wherein the optical sensor (140) comprises processing circuitry configured to determine, based on the measured reflected light from the scene (190), at least one of an image of at least part of the scene (190) or a distance of the electronic device to at least one object in the scene (190).

10. The electronic device of any of claims 1 to 10, wherein the plurality of illumination elements (120-1, 120-2) are configured to emit infrared light.

11. A method (400) for an electronic device comprising a display device, a plurality of illumination elements, at least one optical element, an optical sensor and control circuitry, wherein the display device comprises a plurality of light-emitting elements for displaying an optical image on a front side of the display device, wherein the at least one optical element is arranged between the plurality of illumination elements and the display device, and wherein the display device is arranged between the optical sensor and the scene, the method comprising:
emitting (402) light for illuminating a scene in front of the front side of the display device by the plurality of illumination elements, wherein the display device is arranged between the plurality of illumination elements and the scene, wherein the display device comprises a first display region exhibiting a first transmissivity for the light emitted by the plurality of illumination elements and a second display region exhibiting a second transmissivity for the light emitted by the plurality of illumination elements, the first transmissivity being higher than the second transmissivity;
focusing (404) the light emitted by the plurality of illumination elements through the first display region using the at least one optical element;
measuring, by the optical sensor, a fraction of the light emitted by the plurality of illumination elements that is reflected back from the scene;
receiving, by the control circuitry, object information indicating a position or a movement of an object in the scene;
determining, by the control circuitry, a part of the scene that likely contains the object based on the object information; and
selectively controlling, by the control circuitry, light emission by individual illumination elements of the plurality of illumination elements in order to selectively illuminate the part of the scene that likely contains the object.

12. The method (400) of claim 11, further comprising:
determining, by processing circuitry of the optical sensor and based on the measured reflected light from the scene, at least one of an image of at least part of the scene or a distance of the electronic device to at least one object in the scene.

13. The method (400) of claim 11 or claim 12, further comprising:
receiving, by the control circuitry, an output signal of the optical sensor indicating an intensity of the reflected light measured by the optical sensor; and
controlling, by the control circuitry, a light emission intensity of the plurality of illumination elements based on the output signal.

14. The method (400) of any of claims 11 to 13, wherein the light is infrared light.

15. The method (400) of any of claims 11 to 14, wherein the device further comprises at least one diffusion element, and wherein the method further comprises diffusing, by the at least one diffusion element, the light focused through the first display region.

## Patentansprüche

1. Eine elektronische Vorrichtung (100, 200, 300), umfassend:
eine Anzeigevorrichtung (110), umfassend eine Mehrzahl von lichtemittierenden Elementen zum Anzeigen eines optischen Bildes auf einer Vorderseite der Anzeigevorrichtung (110);
eine Mehrzahl von Beleuchtungselementen (120-1, 120-2), die konfiguriert sind, um Licht (121) zum Beleuchten einer Szene (190) vor der Vorderseite der Anzeigevorrichtung (110) zu emittieren, wobei die Anzeigevorrichtung (110) zwischen der Mehrzahl von Beleuchtungselementen (120-1, 120-2) und der Szene (190) angeordnet ist, wobei die Anzeigevorrichtung (110) eine erste Anzeigeregion (111) umfasst, die eine erste Transmissivität für das Licht (121) aufweist, das von der Mehrzahl von Beleuchtungselementen (120-1, 120-2) emittiert wird, und eine zweite Anzeigeregion (112), die eine zweite Transmissivität für das Licht (121) aufweist, das von der Mehrzahl von Beleuchtungselementen (120-1, 120-2) emittiert wird, wobei die erste Transmissivität höher als die zweite Transmissivität ist;
mindestens ein optisches Element (130), das zwischen der Mehrzahl von Beleuchtungselementen (120-1, 120-2) und der Anzeigevorrichtung (110) angeordnet ist, wobei das mindestens eine optische Element (130) ausgebildet ist, um das von der Mehrzahl von Beleuchtungselementen (120-1, 120-2) emittierte Licht durch die erste Anzeigeregion (111) zu fokussieren;
einen optischen Sensor (140), der ausgebildet ist, um einen Bruchteil des von der Mehrzahl von Beleuchtungselementen (120-1, 120-2) emittierten Lichts (121) zu messen, der von der Szene (190) zurückreflektiert wird, wobei die Anzeigevorrichtung (110) zwischen dem optischen Sensor (140) und der Szene (190) angeordnet ist; und
eine Steuerschaltungsanordnung (150), die ausgebildet ist, um:
Objektinformationen zu empfangen, die eine Position oder eine Bewegung eines Objekts in der Szene (190) anzeigen;
einen Teil der Szene (190), der wahrscheinlich das Objekt umfasst, basierend auf den Objektinformationen zu bestimmen; und
selektiv die Lichtemission durch einzelne Beleuchtungselemente der Mehrzahl von Beleuchtungselementen (120-1, 120-2) zu steuern, um den Teil der Szene (190), der wahrscheinlich das Objekt umfasst, selektiv zu beleuchten.

2. Die elektronische Vorrichtung gemäß Anspruch 1, wobei die elektronische Vorrichtung eine Mehrzahl von optischen Elementen umfasst, die zwischen der Mehrzahl von Beleuchtungselementen (120-1, 120-2) und der Anzeigevorrichtung (110) angeordnet sind, um das von der Mehrzahl von Beleuchtungselementen (120-1, 120-2) emittierte Licht durch die erste Anzeigeregion (111) zu fokussieren.

3. Die elektronische Vorrichtung gemäß Anspruch 2, wobei mindestens eines der Mehrzahl von optischen Elementen zwischen jedem der Mehrzahl von Beleuchtungselementen (120-1, 120-2) und der Anzeigevorrichtung (110) angeordnet ist, um das von dem jeweiligen Beleuchtungselement emittierte Licht durch die erste Anzeigeregion (111) zu fokussieren.

4. Die elektronische Vorrichtung gemäß Anspruch 2, wobei mindestens zwei der Mehrzahl von optischen Elementen jeweils zwischen mindestens einem Teil der Mehrzahl von Beleuchtungselementen (120-1, 120-2) und der Anzeigevorrichtung (110) angeordnet sind, um das von dem jeweiligen Beleuchtungselement emittierte Licht durch die erste Anzeigeregion (111) zu fokussieren.

5. Die elektronische Vorrichtung gemäß Anspruch 3 oder Anspruch 4, wobei die erste Anzeigeregion (111) eine Mehrzahl von Teilregionen (111-1, 111-2) umfasst, und wobei die Mehrzahl von optischen Elementen ausgebildet ist, um das von den einzelnen Beleuchtungselementen der Mehrzahl von Beleuchtungselementen (120-1, 120-2) emittierte Licht durch verschiedene der Mehrzahl von Teilregionen (111-1, 111-2) zu fokussieren.

6. Die elektronische Vorrichtung gemäß einem der Ansprüche 1 bis 5, wobei ein Substrat der Anzeigevorrichtung (110) in der ersten Anzeigeregion (111) pro Flächeneinheit in einem geringeren Ausmaß mit einer elektronischen Schaltungsanordnung der Anzeigevorrichtung (110) bedeckt ist als in der zweiten Anzeigeregion (112).

7. Die elektronische Vorrichtung gemäß einem der Ansprüche 1 bis 6, ferner umfassend mindestens ein Diffusionselement, das ausgebildet ist, um das durch die erste Anzeigeregion (111) fokussierte Licht zu diffundieren.

8. Die elektronische Vorrichtung gemäß einem der Ansprüche 1 bis 7, wobei die Steuerschaltungsanordnung (150) ferner ausgebildet ist, um:
ein Ausgangssignal (141) des optischen Sensors (140) zu empfangen, das eine Intensität des von dem optischen Sensor (140) gemessenen reflektierten Lichts anzeigt; und
eine Lichtemissionsintensität der Mehrzahl von Beleuchtungselementen (120-1, 120-2) basierend auf dem Ausgangssignal (141) zu steuern.

9. Die elektronische Vorrichtung gemäß einem der Ansprüche 1 bis 8, wobei der optische Sensor (140) eine Verarbeitungsschaltungsanordnung umfasst, die ausgebildet ist, um basierend auf dem gemessenen reflektierten Licht von der Szene (190) mindestens eines von einem Bild von mindestens einem Teil der Szene (190) oder einer Distanz der elektronischen Vorrichtung zu mindestens einem Objekt in der Szene (190) zu bestimmen.

10. Die elektronische Vorrichtung gemäß einem der Ansprüche 1 bis 10, wobei die Mehrzahl von Beleuchtungselementen (120-1, 120-2) ausgebildet ist, um Infrarotlicht zu emittieren.

11. Ein Verfahren (400) für eine elektronische Vorrichtung, umfassend eine Anzeigevorrichtung, eine Mehrzahl von Beleuchtungselementen, mindestens ein optisches Element, einen optischen Sensor und eine Steuerschaltungsanordnung, wobei die Anzeigevorrichtung eine Mehrzahl von lichtemittierenden Elementen zum Anzeigen eines optischen Bildes auf einer Vorderseite der Anzeigevorrichtung umfasst, wobei das mindestens eine optische Element zwischen der Mehrzahl von Beleuchtungselementen und der Anzeigevorrichtung angeordnet ist, und wobei die Anzeigevorrichtung zwischen dem optischen Sensor und der Szene angeordnet ist, wobei das Verfahren umfasst:
Emittieren (402) von Licht zum Beleuchten einer Szene vor der Vorderseite der Anzeigevorrichtung durch die Mehrzahl von Beleuchtungselementen, wobei die Anzeigevorrichtung zwischen der Mehrzahl von Beleuchtungselementen und der Szene angeordnet ist, wobei die Anzeigevorrichtung eine erste Anzeigeregion umfasst, die eine erste Transmissivität für das Licht aufweist, das von der Mehrzahl von Beleuchtungselementen emittiert wird, und eine zweite Anzeigeregion, die eine zweite Transmissivität für das Licht aufweist, das von der Mehrzahl von Beleuchtungselementen emittiert wird, wobei die erste Transmissivität höher als die zweite Transmissivität ist;
Fokussieren (404) des von der Mehrzahl von Beleuchtungselementen emittierten Lichts durch die erste Anzeigeregion unter Verwendung des mindestens einen optischen Elements;
Messen, durch den optischen Sensor, eines Bruchteils des von der Mehrzahl von Beleuchtungselementen emittierten Lichts, der von der Szene zurückreflektiert wird;
Empfangen, durch die Steuerschaltungsanordnung, von Objektinformationen, die eine Position oder eine Bewegung eines Objekts in der Szene anzeigen;
Bestimmen, durch die Steuerschaltungsanordnung, eines Teils der Szene, der wahrscheinlich das Objekt umfasst, basierend auf den Objektinformationen; und
selektives Steuern, durch die Steuerschaltungsanordnung, der Lichtemission durch einzelne Beleuchtungselemente der Mehrzahl von Beleuchtungselementen, um den Teil der Szene, der wahrscheinlich das Objekt umfasst, selektiv zu beleuchten.

12. Das Verfahren (400) gemäß Anspruch 11, ferner umfassend:
Bestimmen, durch die Verarbeitungsschaltungsanordnung des optischen Sensors und basierend auf dem gemessenen reflektierten Licht von der Szene, mindestens eines von einem Bild von mindestens einem Teil der Szene oder einer Distanz der elektronischen Vorrichtung zu mindestens einem Objekt in der Szene.

13. Das Verfahren (400) gemäß Anspruch 11 oder Anspruch 12, ferner umfassend:
Empfangen, durch die Steuerschaltungsanordnung, eines Ausgangssignals des optischen Sensors, das eine Intensität des von dem optischen Sensor gemessenen reflektierten Lichts anzeigt; und
Steuern, durch die Steuerschaltungsanordnung, einer Lichtemissionsintensität der Mehrzahl von Beleuchtungselementen basierend auf dem Ausgangssignal.

14. Das Verfahren (400) gemäß einem der Ansprüche 11 bis 13, wobei das Licht Infrarotlicht ist.

15. Das Verfahren (400) gemäß einem der Ansprüche 11 bis 14, wobei die Vorrichtung ferner mindestens ein Diffusionselement umfasst, und wobei das Verfahren ferner ein Diffundieren, durch das mindestens eine Diffusionselement, des durch die erste Anzeigeregion fokussierten Lichts umfasst.

## Revendications

1. Dispositif électronique (100, 200, 300), comprenant :
un dispositif d'affichage (110) comprenant une pluralité d'éléments électroluminescents pour afficher une image optique sur un côté avant du dispositif d'affichage (110) ;
une pluralité d'éléments d'éclairage (120-1, 120-2) configurés pour émettre de la lumière (121) pour éclairer une scène (190) devant le côté avant du dispositif d'affichage (110), dans lequel le dispositif d'affichage (110) est agencé entre la pluralité d'éléments d'éclairage (120-1, 120-2) et la scène (190), dans lequel le dispositif d'affichage (110) comprend une première région d'affichage (111) présentant une première transmissivité pour la lumière (121) émise par la pluralité d'éléments d'éclairage (120-1, 120-2) et une deuxième région d'affichage (112) présentant une deuxième transmissivité pour la lumière (121) émise par la pluralité d'éléments d'éclairage (120-1, 120-2), la première transmissivité étant supérieure à la deuxième transmissivité ;
au moins un élément optique (130) agencé entre la pluralité d'éléments d'éclairage (120-1, 120-2) et le dispositif d'affichage (110), dans lequel l'au moins un élément optique (130) est configuré pour focaliser la lumière émise par la pluralité d'éléments d'éclairage (120-1, 120-2) à travers la première région d'affichage (111) ;
un capteur optique (140) configuré pour mesurer une fraction de la lumière (121) émise par la pluralité d'éléments d'éclairage (120-1, 120-2) qui est réfléchie par la scène (190), dans lequel le dispositif d'affichage (110) est agencé entre le capteur optique (140) et la scène (190) ; et
une circuiterie de commande (150) configurée pour :
recevoir des informations d'objet indiquant une position ou un mouvement d'un objet dans la scène (190) ;
déterminer une partie de la scène (190) qui contient probablement l'objet sur la base des informations d'objet ; et
commander sélectivement l'émission de lumière par des éléments d'éclairage individuels de la pluralité d'éléments d'éclairage (120-1, 120-2) afin d'éclairer sélectivement la partie de la scène (190) qui contient probablement l'objet.

2. Dispositif électronique selon la revendication 1, dans lequel le dispositif électronique comprend une pluralité d'éléments optiques agencés entre la pluralité d'éléments d'éclairage (120-1, 120-2) et le dispositif d'affichage (110) pour focaliser la lumière émise par la pluralité d'éléments d'éclairage (120-1, 120-2) à travers la première région d'affichage (111).

3. Dispositif électronique selon la revendication 2, dans lequel au moins l'un de la pluralité d'éléments optiques est agencé entre chacun de la pluralité d'éléments d'éclairage (120-1, 120-2) et le dispositif d'affichage (110) pour focaliser la lumière émise par l'élément d'éclairage respectif à travers la première région d'affichage (111).

4. Dispositif électronique selon la revendication 2, dans lequel au moins deux de la pluralité d'éléments optiques sont respectivement agencés entre au moins une partie de la pluralité d'éléments d'éclairage (120-1, 120-2) et le dispositif d'affichage (110) pour focaliser la lumière émise par l'élément d'éclairage respectif à travers la première région d'affichage (111).

5. Dispositif électronique selon la revendication 3 ou la revendication 4, dans lequel la première région d'affichage (111) comprend une pluralité de sous-régions (111-1, 111-2), et dans lequel la pluralité d'éléments optiques sont configurés pour focaliser la lumière émise par les éléments d'éclairage individuels de la pluralité d'éléments d'éclairage (120-1, 120-2) à travers des sous-régions différentes de la pluralité de sous-régions (111-1, 111-2).

6. Dispositif électronique selon l'une des revendications 1 à 5, un substrat du dispositif d'affichage (110) est dans la première région d'affichage (111) par unité de surface dans une moindre mesure recouvert par une circuiterie électronique du dispositif d'affichage (110) que dans la deuxième région d'affichage (112).

7. Dispositif électronique selon l'une des revendications 1 à 6, comprenant en outre au moins un élément de diffusion configuré pour diffuser la lumière focalisée à travers la première région d'affichage (111).

8. Dispositif électronique selon l'une des revendications 1 à 7, dans lequel la circuiterie de commande (150) est en outre configurée pour :
recevoir un signal de sortie (141) du capteur optique (140) indiquant une intensité de la lumière réfléchie mesurée par le capteur optique (140) ; et
commander une intensité d'émission de lumière de la pluralité d'éléments d'éclairage (120-1, 120-2) sur la base du signal de sortie (141).

9. Dispositif électronique selon l'une des revendications 1 à 8, dans lequel le capteur optique (140) comprend une circuiterie de traitement configurée pour déterminer, sur la base de la lumière réfléchie mesurée par la scène (190), au moins l'une d'une image d'au moins une partie de la scène (190) ou d'une distance du dispositif électronique à au moins un objet dans la scène (190).

10. Dispositif électronique selon l'une des revendications 1 à 10, dans lequel la pluralité d'éléments d'éclairage (120-1, 120-2) sont configurés pour émettre une lumière infrarouge.

11. Procédé (400) pour un dispositif électronique comprenant un dispositif d'affichage, une pluralité d'éléments d'éclairage, au moins un élément optique, un capteur optique et une circuiterie de commande, dans lequel le dispositif d'affichage comprend une pluralité d'éléments électroluminescents pour afficher une image optique sur un côté avant du dispositif d'affichage, dans lequel l'au moins un élément optique est agencé entre la pluralité d'éléments d'éclairage et le dispositif d'affichage, et dans lequel le dispositif d'affichage est agencé entre le capteur optique et la scène, le procédé comprenant le fait de :
émettre (402) de la lumière pour éclairer une scène devant le côté avant du dispositif d'affichage par la pluralité d'éléments d'éclairage, dans lequel le dispositif d'affichage est agencé entre la pluralité d'éléments d'éclairage et la scène, dans lequel le dispositif d'affichage comprend une première région d'affichage présentant une première transmissivité pour la lumière émise par la pluralité d'éléments d'éclairage et une deuxième région d'affichage présentant une deuxième transmissivité pour la lumière émise par la pluralité d'éléments d'éclairage, la première transmissivité étant supérieure à la deuxième transmissivité ;
focaliser (404) la lumière émise par la pluralité d'éléments d'éclairage à travers la première région d'affichage en utilisant l'au moins un élément optique ;
mesurer, par le capteur optique, une fraction de la lumière émise par la pluralité d'éléments d'éclairage qui est réfléchie par la scène ;
recevoir, par la circuiterie de commande, des informations d'objet indiquant une position ou un mouvement d'un objet dans la scène ;
déterminer, par la circuiterie de commande, une partie de la scène qui contient probablement l'objet sur la base des informations d'objet ; et
commander sélectivement, par la circuiterie de commande, l'émission de lumière par des éléments d'éclairage individuels de la pluralité d'éléments d'éclairage afin d'éclairer sélectivement la partie de la scène qui contient probablement l'objet.

12. Procédé (400) selon la revendication 11, comprenant en outre le fait de :
déterminer, par une circuiterie de traitement du capteur optique et sur la base de la lumière réfléchie mesurée par la scène, au moins l'une d'une image d'au moins une partie de la scène ou d'une distance du dispositif électronique à au moins un objet dans la scène.

13. Procédé (400) selon la revendication 11 ou la revendication 12, comprenant en outre le fait de :
recevoir, par la circuiterie de commande, un signal de sortie du capteur optique indiquant une intensité de la lumière réfléchie mesurée par le capteur optique ; et
commander, par la circuiterie de commande, une intensité d'émission de lumière de la pluralité d'éléments d'éclairage sur la base du signal de sortie.

14. Procédé (400) selon l'une des revendications 11 à 13, dans lequel la lumière est une lumière infrarouge.

15. Procédé (400) selon l'une des revendications 11 à 14, dans lequel le dispositif comprend en outre au moins un élément de diffusion, et dans lequel le procédé comprend en outre le fait de diffuser, par l'au moins un élément de diffusion, la lumière focalisée à travers la première région d'affichage.
